# EUROPÄISCHE PATENTSCHRIFT

(11) **EP 2 604 377 B1**
(45) Veröffentlichungstag und Bekanntmachung des Hinweises auf die Patenterteilung: **15.07.2015**
(21) Anmeldenummer: 11193801.5
(22) Anmeldetag: 15.12.2011
(51) Int. Cl.: B23K 26/38, B23K 26/36, F01D 5/18, F01D 5/28

(54) **Verfahren zur Laserbearbeitung eines Schichtsystems mit keramischer Schicht**
Method for laser processing a laminated piece with ceramic coating
Procédé de traitement laser d'une pièce doté d'une couche en céramique

(43) Veröffentlichungstag der Anmeldung: 19.06.2013
(73) Patentinhaber: Siemens Aktiengesellschaft, 80333 München (DE)
(72) Erfinder: Kiliani, Stefan Werner, 45133 Essen (DE); Ladru, Francis-Jurjen, 13587 Berlin (DE)

(56) Entgegenhaltungen:
- EP-A1- 1 681 128
- EP-A2- 0 492 323
- DE-C1- 19 536 312

## Beschreibung

Die Erfindung betrifft die Laserbearbeitung eines Schichtsystems, das eine keramische Schicht aufweist.

Hochtemperaturbauteile, wie Turbinenschaufeln, weisen eine äußere keramische Schicht zur Wärmedämmung auf.

Diese keramische Wärmedämmschicht ist auf einer metallischen Haftvermittler-Schicht oder einem metallischem Substrat aufgebracht.

Weiterhin werden in solche Hochtemperaturbauteile Durchgangslöcher eingebracht, die durch die keramische Schicht und in bzw. durch das metallische Substrat hindurch führen.

Dabei muss darauf geachtet werden, dass die äußere Oberfläche der keramischen Schicht nicht verschmutzt wird. Dies geschieht häufig durch eine Maskierung (Siehe DE 19 536 312).

Es ist daher Aufgabe der Erfindung, dieses Problem zu lösen. Diese Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: einen Ablauf des erfindungsgemäßen Verfahrens,
- Figur 2: eine Turbinenschaufel,
- Figur 3: eine Liste von Superlegierungen.

Die Figuren und die Beschreibung stellen nur Ausführungsbeispiele der Erfindung dar.

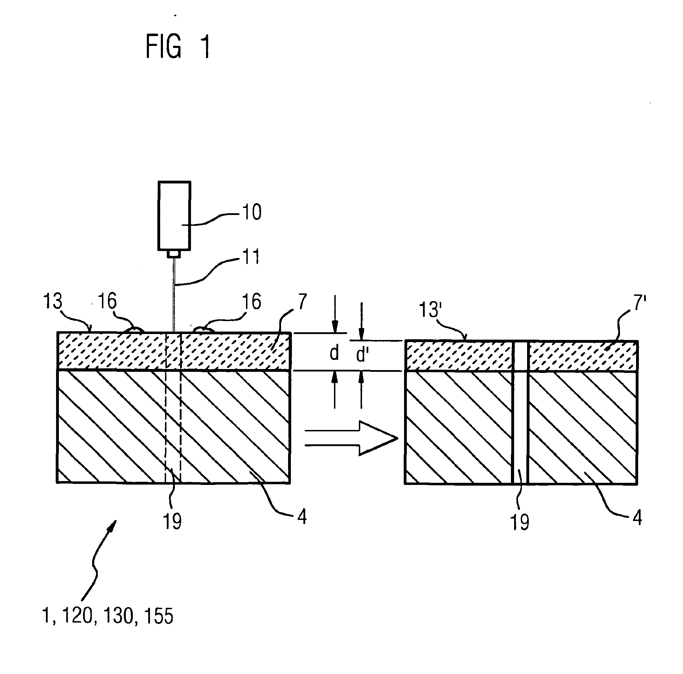

Figur 1 zeigt ein Bauteil 1, 120, 130, 155 als Schichtsystem, das bearbeitet wird.

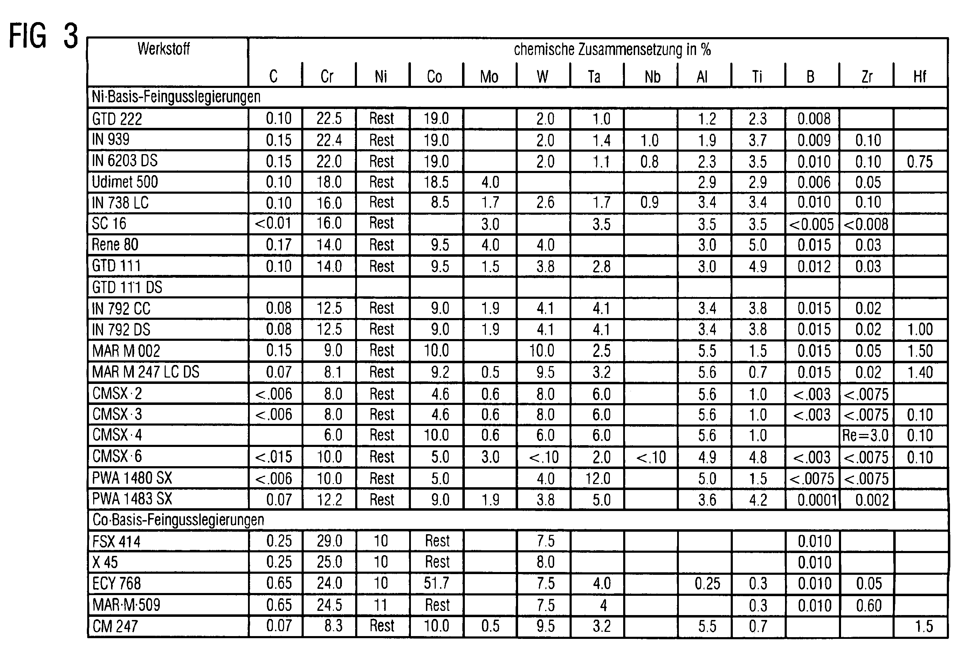

Das Bauteil 1 weist ein metallisches Substrat 4 auf, das insbesondere bei Turbinenschaufeln 120, 130 nickel- und/oder kobaltbasiert ist, insbesondere gemäß Figur 3.

Auf dem Substrat 4 ist direkt eine keramische Schicht 7 oder eine metallische Haftvermittlerschicht (nicht dargestellt) vorhanden, ggf. mit einer Aluminiumoxidschicht direkt unter der keramischen Schicht, also auf dem Substrat oder auf der metallischen Haftvermittlerschicht (MCrAlX).

Die keramische Schicht 7 ist vorzugsweise eine Zirkonoxidschicht oder eine Pyrochlorschicht oder eine Kombination von beiden. Weitere keramische Materialien sind denkbar.

Durch das Schichtsystem, ausgehend von der äußeren Oberfläche 13 der keramischen Schicht 7 soll ein Loch, vorzugsweise ein Durchgangsloch 19 erzeugt werden, wie es gestrichelt angedeutet ist, zumindest wird metallisches Material entfernt.

Die Bearbeitung erfolgt durch einen Energiestrahl, wobei dieser vorzugsweise ein Elektronenstrahl oder ein Laserstrahl 11 eines Lasers 10 sein kann.

Bei der Bearbeitung des metallischen Materials (Haftvermittlerschicht und/oder Substrat 4) können sich Metallspritzer auf der äußeren Oberfläche 13 abscheiden.

Dies ist natürlich nicht gewünscht, da diese im späteren Einsatz oxidieren und die keramische Schicht 7 beschädigen können.

Nach dem Stand der Technik wird hier eine Pulverschicht aufgetragen oder eine sonstige mechanische Abdeckung großflächig auf der Oberfläche 13 aufgebracht.

Erfindungsgemäß weist die äußere Schicht 7 eine Dicke d auf, die aber größer ist als das gewünschte Endmaß d' für die Schicht 7' des fertigen Bauteils 1, 120, 130, 155.

Es werden keine Maskierungen verwendet und die Ablagerungen 16 werden zugelassen, wobei diese durch eine Verringerung der Schichtdicke d mit entfernt wurden.

Der abzutragende Bereich d - d' beträgt vorzugsweise 30µm bis 80µm.

Zur Schichtdickenveränderung der Schicht 7 mit der Schichtdicke d kann ein Laserprozess oder ein Glättungsprozess verwendet werden, so dass dann die Oberfläche 13' der Schicht 7' des Endprodukts frei ist von irgendwelchen metallischen Spritzern 16.

Bei einem konkreten Bauteil, wie einer Turbinenschaufel 120, 130, kann es sein, dass nur das Schaufelblatt Kühlluftlöcher 19 aufweist, die mittels eines Lasers 10 hergestellt werden. Somit kann die Schichtdicke der keramischen Schicht 7 nur lokal im Bereich des Schaufelblattes erhöht werden und auf der Schaufelblattform bereits das Endmaß aufweisen.

Die dickere Schicht 7 kann sehr einfach durch die bekannten Beschichtungs-Verfahren wie HVOF oder Plasmaspritz-Verfahren erzeugt werden, weil dies sowieso durch eine lagenweise Auftragung erfolgt und die erhöhte Schichtdicke durch eine weitere Beschichtungslage (30µm - 80µm) einfach herzustellen ist.

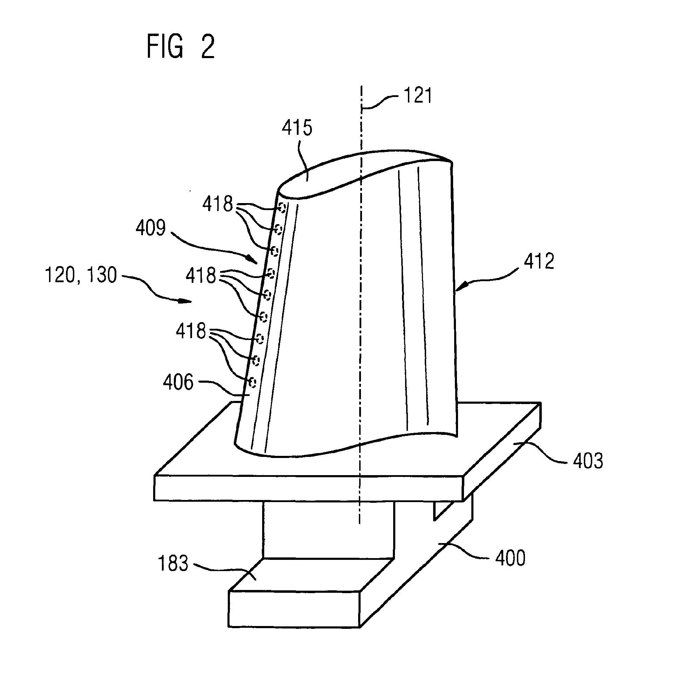

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlYX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al- 0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Laserbearbeitung eines Schichtsystems (1, 120, 130, 155),
wobei das Schichtsystem (1, 120, 130, 155) zumindest ein metallisches Substrat (4) und
eine äußere keramische Schicht (7) aufweist, **dadurch gekennzeichnet, dass** bei einem Nachbehandlungsschritt die Schichtdicke (d) der Schicht (7) reduziert wird,
nachdem das Bauteil (1, 120, 130, 155) die komplette Laserbearbeitung,
insbesondere die Erstellung mehrerer Durchgangslöcher, ganz insbesondere mit einem zusätzlichen Diffusor, durchlaufen hat.

2. Verfahren nach Anspruch 1,
bei dem ein Laserverfahren zur Reduzierung der Schichtdicke (d) der Schicht (7) verwendet wird.

3. Verfahren nach einem oder beiden der Ansprüche 1 oder 2,
bei dem ein Glättungsverfahren zur Reduzierung der Schichtdicke (d) der Schicht (7) verwendet wird.

4. Verfahren nach einem oder mehreren der Ansprüche 1, 2 oder 3,
bei dem die Schichtdicke (d) der Schicht (7) um 3µm bis 80µm reduziert wird.

5. Verfahren nach einem oder mehreren der Ansprüche 1 bis 4,
bei dem für die Laserbearbeitung des Schichtsystems (1, 120, 130, 155) keine Maskierung für die keramische Schicht (7) verwendet wird.

## Claims

1. Process for laser machining a layer system (1, 120, 130, 155),
wherein the layer system (1, 120, 130, 155) has at least one metallic substrate (4) and
an outer ceramic layer (7),
**characterized in that**, during an aftertreatment step, the layer thickness (d) of the layer (7) is reduced once the component (1, 120, 130, 155) has undergone the complete laser machining,
in particular the creation of a plurality of passage holes,
very particularly with an additional diffuser.

2. Process according to Claim 1,
in which a laser process is used for reducing the layer thickness (d) of the layer (7).

3. Process according to either or both of Claims 1 and 2,
in which a smoothing process is used for reducing the layer thickness (d) of the layer (7).

4. Process according to one or more of Claims 1, 2 or 3,
in which the layer thickness (d) of the layer (7) is reduced by 30 µm to 80 µm.

5. Process according to one or more of Claims 1 to 4,
in which no masking is used for the ceramic layer (7) for the laser machining of the layer system (1, 120, 130, 155).

## Revendications

1. Procédé de traitement au laser d'un système (1, 120, 130, 155) stratifié,
dans lequel le système (1, 120, 130, 155) stratifié a au moins
un substrat (4) métallique et
une couche (7) extérieure en céramique,
**caractérisé en ce que**
on réduit, dans un stade de post-traitement, l'épaisseur (d) de la couche (7),
après que la pièce (1, 120, 130, 155) a subi le traitement complet au laser,
notamment après la production de plusieurs trous de passage, d'une manière tout à fait particulière, avec un diffuseur supplémentaire.

2. Procédé suivant la revendication 1,
dans lequel on utilise le procédé au laser pour réduire l'épaisseur (d) de la couche (7).

3. Procédé suivant l'une ou les deux des revendications 1 ou 2,
dans lequel on utilise un procédé de lissage pour réduire l'épaisseur (d) de la couche (7).

4. Procédé suivant l'une ou plusieurs des revendications 1, 2 ou 3,
dans lequel on réduit l'épaisseur (d) de la couche (7) de 30 µm à 80 µm.

5. Procédé suivant l'une ou plusieurs des revendications 1 à 4,
dans lequel on n'utilise pas de masquage de la couche (7) en céramique pour le traitement au laser du système (1, 120, 130, 155) stratifié.
